# EUROPEAN PATENT APPLICATION

(11) **EP 4 571 673 A1**
(43) Date of publication of application: **18.06.2025**
(21) Application number: 24218947.0
(22) Date of filing: 11.12.2024
(51) Int. Cl.: G06V 10/82, G06V 20/64

(54) **METHOD AND APPARATUS WITH OBJECT DETECTION**

(30) Priority: 11.12.2023 KR 20230178980
(71) Applicant: Samsung Electronics Co., Ltd, Suwon-si, Gyeonggi-do 16677 (KR)
(72) Inventor: SON, Hyeongseok, 16678 Suwon-si (KR); PARK, Seungin, 16678 Suwon-si (KR); YOO, Byung In, 16678 Suwon-si (KR); LEE, Dongwook, 16678 Suwon-si (KR); JUNG, Sangil, 16678 Suwon-si (KR)
(74) Representative: Arnold & Siedsma

(57) **Abstract**

An object detection method including extracting voxel features of valid cells from voxel data corresponding to a point cloud obtained using a depth sensor, and generating object detection data using a transformer-based model for object detection based on the extracted voxel features, the valid cells including cells among a plurality of cells, included in the voxel data that includes point data, and a cell among the plurality of cells that does not include corresponding point data is not a valid cell.

## Description

### BACKGROUND

### 1. Field

The following description relates to a method and apparatus with object detection.

### 2. Description of Related Art

Object detection technology, which is a computer technology related to computer vision and image processing, typically includes detecting a specific semantic object instance within a digital image and/or video. In addition to object detection technology which may detect an object in a two-dimensional (2D) image, deep learning-based three-dimensional (3D) object detection technology using light detection and ranging (lidar) data is being developed. The computational demands for 3D object detection requires more computational power than that required for 2D object detection. Therefore, a typical method of obtaining a voxel with 3D point data obtained from lidar includes converting the voxel into 2D features such as bird's eye view (BEV) features, and inputting the 2D features to a deep learning model for object detection as a typical method used to reduce the amount of computation that would be required for object detection from 3D lidar data.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, here is provided an object detection method, the method including extracting voxel features of valid cells from voxel data corresponding to a point cloud obtained using a depth sensor, and generating object detection data using a transformer-based model for object detection based on the extracted voxel features, the valid cells including cells among a plurality of cells, included in the voxel data that includes point data, and a cell among the plurality of cells that does not include corresponding point data is not a valid cell.

Preferably, the voxel features are three-dimensional (3D) features and the generating of the object detection data includes inputting tokens, which include the voxel features, to the transformer-based model.

Preferably, the transformer-based model includes a transformer decoder, and the extracted voxel features is applied to the transformer decoder, that is configured to perform cross attention.

Preferably, the transformer-based model includes a transformer encoder and a transformer decoder, and the extracted voxel features is applied to the transformer encoder, which may be configured to perform cross attention.

Preferably, the extracting of the voxel features includes extracting a respective voxel feature of the valid cells, and the generating of the object detection data includes inputting a token corresponding to each of the respective voxel features to the transformer-based model.

Preferably, the method includes generating position embeddings of the valid cells by performing respective positional encodings of three-dimensional (3D) coordinates of a corresponding point in each of the valid cells and the generating of the object detection data includes generating the object detection data based on the position embeddings and the extracted voxel features.

Preferably, the corresponding point in each of the valid cells is a corresponding center point in each of the valid cells.

Preferably, the generating of the position embeddings of the valid cells includes performing the respective positional encodings of the 3D coordinates of the corresponding center points by applying, for each of the valid cells, a lowest weight to coordinate of a z-axis of the 3D coordinates of the corresponding center point, which includes coordinates at an x-axis, a y-axis, and the z-axis of the corresponding center point.

Preferably, the generating of the position embeddings of the valid cells includes generating the position embeddings of the valid cells by performing the respective positional encodings of the 3D coordinates of the corresponding point in the valid cells based on a sign function.

Preferably, the generating of the object detection data includes extracting image features from an image obtained from an imaging device, generating respective fusion features corresponding to the valid cells based on the voxel features of the valid cells and corresponding image features among the extracted image features, and generating the object detection data from the transformer-based model based on the fusion features.

Preferably, the generating of the object detection data further includes identifying which image features correspond to which valid cells based on a transformation matrix corresponding to the depth sensor and the imaging device.

Preferably, the transformation matrix corresponding to the depth sensor and the imaging device is determined based on a relative position relationship between the depth sensor and the imaging device.

Preferably, the voxel data includes the plurality of cells obtained by dividing a space corresponding to the point cloud in a grid unit of a predetermined volume.

Preferably, the depth sensor includes a light detection and ranging (lidar).

In a general aspect, here is provided an apparatus including one or more processors configured to execute instructions and a memory storing the instructions, and an execution of the instructions configures the one or more processors to extract voxel features of valid cells from voxel data corresponding to a point cloud obtained using a depth sensor, and generate object detection data using a transformer-based model for object detection based on the extracted voxel features, the valid cells including cells among a plurality of cells, included in the voxel data that includes point data, and a cell among the plurality of cells that does not include corresponding point data is not a valid cell.

Preferably, the transformer-based model includes a transformer decoder and the extracted voxel features may be applied to the transformer decoder, which may be configured to perform cross attention.

Preferably, the transformer-based model includes a transformer encoder and a transformer decoder and the extracted voxel features are applied to the transformer encoder, which is configured to perform cross attention.

Preferably, the one or more processors are configured to generate position embedding of the valid cells by performing respective positional encodings of three-dimensional (3D) coordinates of a corresponding point in each of the valid cell and the generating of the object detection data includes obtaining the object detection data based on the position embeddings and the extracted voxel features.

Preferably, the generating of the object detection data includes extracting image features from an image obtained from an imaging device, generating respective fusion features corresponding to the valid cells based on the voxel features of the valid cells and the corresponding image features among the extracted image features, and generating the object detection data from the transformer-based model based on the fusion features.

Preferably, the generating of the object detection data includes identifying which image features correspond to which valid cells based on a transformation matrix corresponding to the depth sensor and the imaging device.

Preferably, the transformation matrix corresponding to the depth sensor and the imaging device is determined based on a relative position relationship between the depth sensor and the imaging device.

Preferably, the depth sensor includes a light detection and ranging (lidar).

Preferably, the voxel data includes the plurality of cells obtained by dividing a space corresponding to the point cloud in a grid unit of a predetermined volume.

In a general aspect, here is provided an electronic device including one or more processors configured to execute instructions and a memory storing the instructions, and an execution of the instructions configures the one or more processors to generate object detection data using a transformer-based model, configured for object detection, through provision of tokens that include three-dimensional (3D) space voxel features extracted from 3D point cloud data generated using a depth sensor.

Preferably, the voxel features represent sparse features extracted from among the point cloud.

Preferably, the one or more processors is/are configured to perform the extraction of the voxel features, and the tokens respectively include a corresponding voxel feature and corresponding 3D coordinates for a respective portion of the point cloud that corresponds to the corresponding voxel feature.

Preferably, the one or more processors is/are configured to detect an object based on the generated object detection data and the depth sensor includes a light detection and ranging (lidar).

### BRIEF DESCRIPTION OF THE DRAWINGS

FIG. 1 illustrates an example object detection method according to one or more embodiments.
FIGS. 2A and 2B each illustrate an example of a valid cell of voxel data according to one or more embodiments.
FIG. 3 illustrates an example set of tokens corresponding to voxel features input to a transformer-based model according to one or more embodiments.
FIG. 4 illustrates an example transformer-based model according to one or more embodiments.
FIGS. 5A and 5B each illustrate example systems for detecting an object according to one or more embodiments.
FIG. 6 illustrates an example method of determining a position in an image corresponding to each cell included in voxel data according to one or more embodiments.
FIG. 7 illustrates an example configuration of an apparatus according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

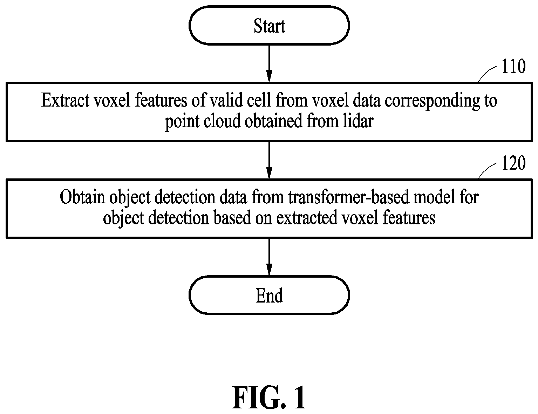

FIG. 1 illustrates an example object detection method according to one or more embodiments.

An object detection method according to an example relates to a method of detecting a three-dimensional (3D) object included in data sensed by a depth sensor (e.g., a light detection and ranging (lidar)). A typical method of using lidar data, for example, for object detection entails large computational costs and to save on those costs, a voxel is obtained from lidar and converted into 2D features, such as a bird's eye view (i.e. a top-down view). In the typical method, it is necessary to use such 2D features in a bird's eye view (BEV) space even though 3D voxel-level representation of the lidar data could be obtained. In particular, in the typical method, such extracted 3D voxel features cannot be directly used to detect objects. Rather, any 3D information captured by a lidar, for example, must be converted to the 2D BEV space before the 2D features can be directly used to detect objects. Using features in the BEV space may result in z-axis information being lost for that BEV space.

Rather, in various embodiments, higher-resolution 3D voxel features may be directly employed without resorting to a BEV feature set (i.e., without performing any 3D feature to 2D BEV space conversion) , which may also save computational costs. In addition, in an example, using 3D sparse voxel features may provide richer 3D geometric information than typical BEV features, thereby increasing overall performance while reducing its computational cost.

Referring to FIG. 1, in a non-limiting example, the object detection method may include operation 110 of extracting voxel features of a valid cell from voxel data corresponding to a point cloud obtained from the lidar.

A point cloud is a set of one or more points positioned in a 3D space, and may correspond to data sensed or collected by the lidar.

The voxel data corresponding to the point cloud may include a plurality of cells obtained by dividing a space corresponding to the point cloud in a grid unit of a predetermined volume. A cell included in the voxel data may include point data included in a space corresponding to the cell. Herein, a cell that includes point data is referred to as a valid cell, while a cell that does not include point data is not a valid cell (i.e., it may be referred to as an invalid cell).

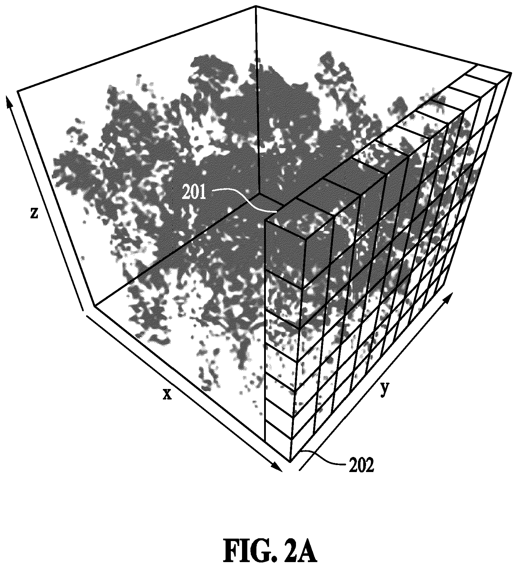

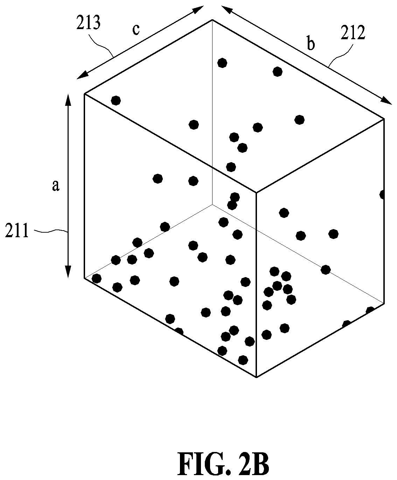

FIGS. 2A and 2B each illustrate an example of a valid cell of voxel data according to one or more embodiments.

Referring to FIG. 2A, in a non-limiting example, the voxel data may include a plurality of cells obtained by dividing a 3D space corresponding to the point cloud in a grid unit of a predetermined volume. In an example, the 3D space may include a coordinate space determined with three axes including an x-axis, a y-axis, and a z-axis. The 3D space may include a plurality of pieces of point data. The point data may indicate a position value of the point data in the 3D space. For example, the point data may indicate a 3D coordinate value in the 3D space. Accordingly, the point data may be coordinate value including an x-axis value, a y-axis value, and a z-axis value.

In an example, voxel data may include a first cell 201 and a second cell 202. Referring to FIG. 2B, in a non-limiting example, the first cell 201 may correspond to a cell obtained by dividing a space corresponding to the point cloud in a grid unit with a volume of a(211) × b(212) × c(213). The second cell 202 and other cells shown in FIG. 2A may also correspond to cells indicating grid cells each corresponding to a volume of a(211) × b(212) × c(213). The space corresponding to the first cell 201 may include a plurality of pieces of point data. Each piece of the point data included in the first cell 201 may indicate a position value (e.g., a 3D coordinate value) of the point data in the 3D space.

Referring back to FIG. 2A, the space corresponding to the second cell 202 may not include corresponding point data. This case may imply that there is no value of the second cell 202 or may correspond to a value indicating no data (e.g., null).

A valid cell may include a cell including a data value among the cells contained in the voxel data. In other words, the valid cell may refer to a cell including point data in a space corresponding to the cell. In an example, the first cell 201 corresponds to a cell with a determined value because the space corresponding to the first cell 201 includes one or more pieces of point data. Accordingly, the first cell 201 may correspond to the valid cell. In another example, the second cell 202 does not have a value because the space corresponding to the second cell 202 does not include point data. Accordingly, the second cell 202 may not be the valid cell.

In an example, voxel features of the valid cell may include features that correspond to the valid cell among features extracted from the point cloud. In other words, the voxel features of the valid cell may be determined based on features extracted from one or more pieces of point data included in a space corresponding to the valid cell. For example, the voxel features of the valid cell may include a representative value (e.g., a mean, weighted sum, or the like) of the features extracted from the plurality of pieces of point data included in the space corresponding to the valid cell. In an example, the voxel features of the valid cell may include a set of the features extracted from the plurality of pieces of point data included in the space corresponding to the valid cell. In an example, the voxel features of the valid cell may include a set of the features extracted from at least a portion of the plurality of pieces of point data included in the space corresponding to the valid cell.

In an example, the features of the point data may be obtained from a model for feature extraction. The model for feature extraction may include, for example, a neural network trained to extract features by embedding input data.

In an example, the object detection method may include operation 120 of obtaining object detection data from a transformer-based model for object detection based on the extracted voxel features. The transformer-based model for object detection may be a model based on a transformer that is trained to perform an object detection task.

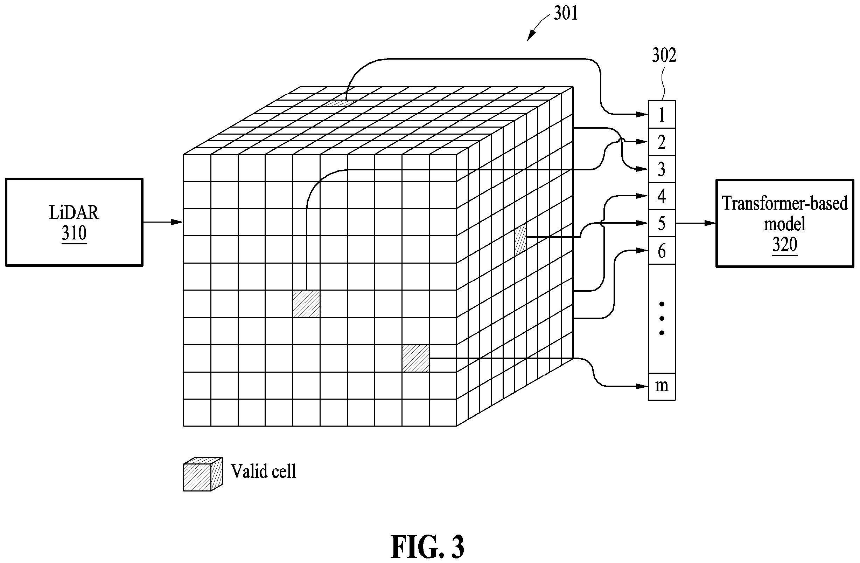

In an example, the extracted voxel features may include a set of tokens corresponding to the voxel features of each valid cell (e.g., of only valid cells) included in the voxel data. Referring to FIG. 3, in a non-limiting example, voxel features of a valid cell may be extracted from voxel data 301 corresponding to a point cloud obtained from a lidar 310. When the number of valid cells included in the voxel data 301 is m (i.e., where m is an arbitrary natural number), the voxel features extracted from each valid cell may correspond to one token. Thus, the extracted voxel features may include a set of m tokens 302 each corresponding to the features extracted from a corresponding valid cell. The set of tokens 302 may correspond to input data of the transformer-based model 320. The transformer-based model 320 may output the object detection data corresponding to the input set of tokens 302.

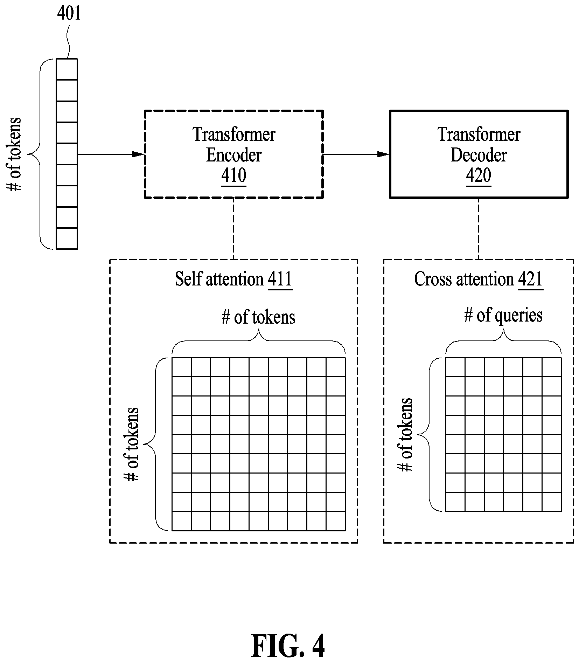

FIG. 4 illustrates an example transformer-based model according to one or more embodiments. In an example, the transformer-based model may include a transformer model, which is a trained neural network. Referring to FIG. 4, in a non-limiting example, the transformer-based model may include both of a transformer encoder 410 and a transformer decoder 420, or may include the transformer decoder 420 but may not include the transformer encoder 410 according to the structure of the transformer-based model.

In an example, the transformer-based model may include the transformer decoder 420 that performs cross attention computation 421. A set of tokens 401 corresponding to (e.g., including) the extracted voxel features may be applied to the transformer decoder 420 as key data and value data for the cross attention computation 421. The amount of computation required for the cross attention computation 421 may be proportional to the product of a size of the set of tokens 401 and a size of a query that is input to the transformer decoder 420. The amount of computation required for the cross attention computation 421 may vary depending either on the size of the input set of tokens 401 or on the number of tokens included in the set of tokens 401.

In an example, the transformer-based model may include the transformer encoder 410 and the transformer decoder 420. The transformer decoder 420 may perform self-attention computation 411. The set of tokens 401 corresponding to the extracted voxel features may be applied to the transformer encoder as key data and value data for the self-attention computation 411. The amount of computation for the self-attention computation 411 may be proportional to the square of the size of the set of tokens 401. The amount of computation for the self-attention computation 411 may vary depending on the size of the input set of tokens 401 or the number of tokens included in the set of tokens 401.

In an example, the number of tokens included in the set of tokens 401 may correspond to the number of valid cells included in the voxel data. The size of the set of tokens 401 may be reduced by generating only tokens that correspond to the valid cells including the point data, compared to generating tokens that would correspond to the all cells included in the voxel data. Since the size of the set of tokens 401 determines the amount of computation of the self-attention computation 411 and the cross attention computation 421, the amount of computation required for the self-attention computation 411 and the cross attention computation 421 may be reduced when the size of the set of tokens 401 is reduced. Accordingly, when the set of tokens 401 including the voxel features extracted from only the valid cells is input, the amount of computation and a computation speed for the object detection of the transformer-based model may be reduced.

Referring back to FIG. 1, in an example, separate from , or during, operation 120 of obtaining the object detection data, position embedding of a valid cell may also be obtained by performing positional encoding of 3D coordinates for a point or points of the valid cell, and by then obtaining object detection data based on the position embedding and the extracted voxel features. For example, the position embedding of the valid cell may be added to the voxel features extracted from the valid cell and applied to the transformer-based model. The valid cell's position information may be input to the transformer-based model based on the position embedding. The transformer-based model may perform computation for the object detection based on the position information of the valid cell.

In an example, the position embedding may correspond to embedding data indicating the position of the valid cell in the 3D space. The 3D coordinates of the point in the valid cell for the positional encoding may be determined based on 3D coordinate values of points within the valid cell.

In an example, the obtaining of the position embedding of the valid cell may include performing the positional encoding of the 3D coordinates of a center point in the valid cell. For example, the 3D coordinates for the valid cell may be determined as an average of the 3D coordinate values of points included within the valid cell. For example, the 3D coordinates of the valid cell may be determined as a 3D coordinate value of a point closest to a center position of the valid cell from among all the points included within the valid cell.

In an example, the obtaining of the position embedding of the valid cell may include performing the positional encoding of the 3D coordinates of the center point in the valid cell by applying a lowest weight to a z-axis coordinate of the 3D coordinates corresponding to the x-axis, y-axis, and z-axis of the point in the valid cell.

In an example, the obtaining of the position embedding of the valid cell may include obtaining the position embedding of the valid cell by performing the positional encoding of the 3D coordinates of the point in the valid cell based on a sign function. The position embedding of the valid cell may be obtained by applying the sign function to the 3D coordinates of the point in the valid cell.

In an example, the respective voxel features extracted from valid cells of a point cloud captured by (or generated using) lidar or other 3D point cloud imaging device (e.g., a time of flight (ToF) or other depth sensors, cameras, or systems), may be fused with features extracted from an image obtained from an image device (e.g., a camera with a color, grayscale, or monochrome visual and/or non-visual spectrum image sensor(s)) and input to the transformer-based model.

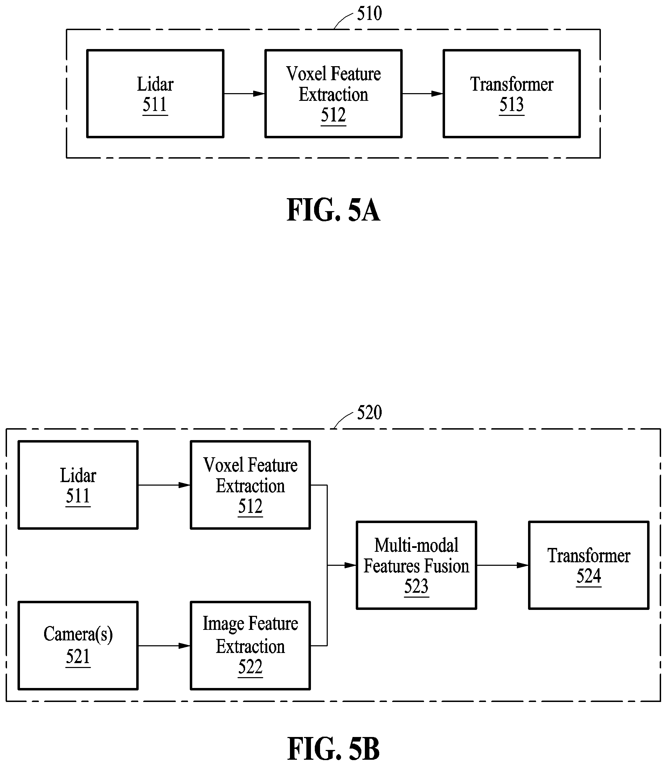

FIGS. 5A and 5B each illustrate example systems for detecting an object according to one or more embodiments. Referring to FIG. 5A, in a non-limiting example, when only cloud modality obtained from a lidar 511 is used for the object detection, a system 510 for the object detection may include the lidar 511, a voxel feature extraction module 512, and a transformer-based model 513. The voxel feature extraction module 512 may perform extracting voxel features of a valid cell from voxel data corresponding to a point cloud obtained from the lidar 511. The voxel features obtained by the voxel feature extraction module 512 may be input to the transformer-based model 513. The transformer-based model 513 may output an object detection result from the voxel features.

In an example, an image modality obtained from the camera may also be used for the object detection (i.e., the object detection is performed using more than simply the point cloud modality). Referring back to FIG. 1, when the point cloud modality and the image modality are used for the object detection, in an example, operation 120 of obtaining the object detection data of FIG. 1 may include extracting image features from an image obtained from a camera, identifying image features corresponding to the valid cell from the image features based on a transformation matrix corresponding to the lidar and the camera, obtaining fusion features corresponding to the valid cell based on the 3D space voxel features of the valid cell and the identified image features (e.g., 2D image features), and obtaining object detection data from the transformer-based model based on the fusion features. For example, each of the aforementioned tokens may include a 3D space voxel feature and an image feature that is positionally matched with the 3D space voxel feature. The inclusion of both a 3D space voxel feature and an image feature in a token could be achieved through a combination of the same (e.g., through concatenation).

Referring to FIG. 5B, in a non-limiting example, when the point cloud modality and the image modality are used, a system 520 for the object detection may include the lidar 511, the voxel feature extraction module 512, one or more cameras 521, an image feature extraction module 522, a multi-modal feature fusion module 523, and a transformer-based model 524. The image feature extraction module 522 may perform extracting features from pixel data of an image obtained from the one or more cameras 521. The multi-modal features fusion module 523 may fuse voxel features obtained by the voxel feature extraction module 512 and image features obtained by the image feature extraction module 522. The fusion of the voxel features and the image features may refer to fusion of the image features extracted from a pixel of an image corresponding to the valid cell, from which the voxel features are extracted. The pixel of the image corresponding to the valid cell may be identified or determined based on the transformation matrix corresponding to the lidar 511 and the cameras 521.

In an example, the transformation matrix corresponding to the lidar 511 and the cameras 521 may be determined based on a relative position relationship between the lidar and the camera. The image and the point cloud may correspond to data obtained by a sensor installed in an adjacent or similar position. In an example, the image and the point cloud may correspond to data obtained by the cameras 521, or other imaging devices, and the lidar 511 installed in the same vehicle, respectively. The image may include one or more images obtained by the one or more cameras 521 having at least one of a position or angle that is different from others. The positions of the camera 521 for obtaining the image and the lidar 511 for obtaining the position cloud may be predetermined. The relative position relationship between the camera 521 and the lidar 511 may be predetermined. The relative position relationship of the camera 521 and the lidar 511 may determine the transformation matrix corresponding to the lidar 511 and the camera 521.

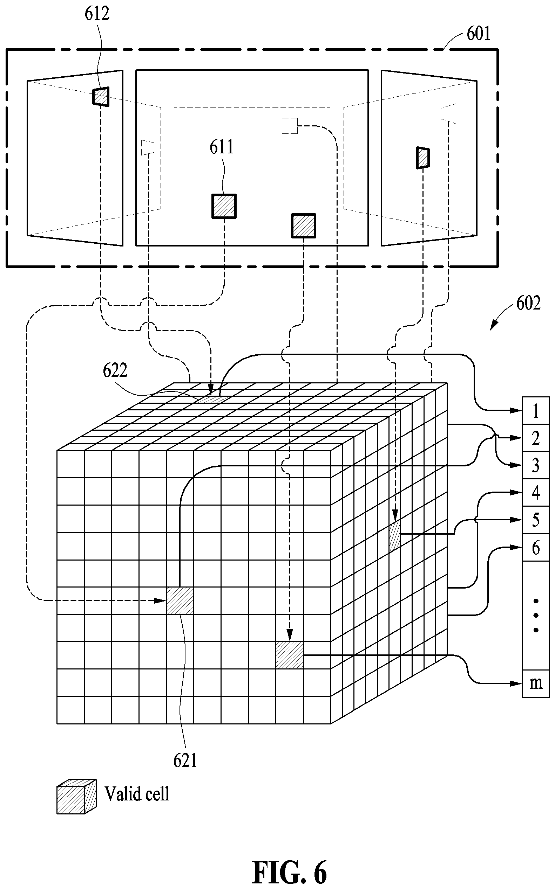

The position in an image corresponding to each cell included in the voxel data may be determined based on the transformation matrix. Referring to FIG. 6, in a non-limiting example, a camera arrangement corresponding to a lidar may include six cameras, and six images 601 obtained respectively by the six cameras may be obtained to correspond to voxel data 602. Each cell included in the voxel data 602 corresponding to a point cloud obtained by the lidar may correspond to a pixel included in at least one of the six images 601 obtained by the six cameras. In an example, a first voxel 621 included in the voxel data may correspond to a first pixel 611 included in a first image among the six images 601. For example, a second voxel 622 included in the voxel data may correspond to a second pixel 612 included in a second image among the six images 601. A pixel in an image corresponding to a cell included in the voxel data 602 may be determined based on the transformation matrix corresponding to the lidar and the camera.

In an example, the object detection data that is obtained based on the transformer-based model may include an object detection result corresponding to the point cloud. The object detection result may include grouping information (e.g., a 3D bounding box) of the point data identified as one object and classification information of an object identified from the point cloud.

In an example, the lidar and/or the camera may be sensors installed in a vehicle. The object detection result obtained from data sensed by the lidar and/or the camera installed in the vehicle may be used for autonomous driving of the vehicle. In an example, the lidar and/or the camera may also be installed in mobile devices and communication devices. One example of a mobile device may be a robot vacuum cleaner device, vehicle, or drone, that may traverse obstacles and/or determine paths in a room, area, or space. Another example may include processing 3D features observed by, in an example, a camera provided on a phone and/or a mobile communications device.

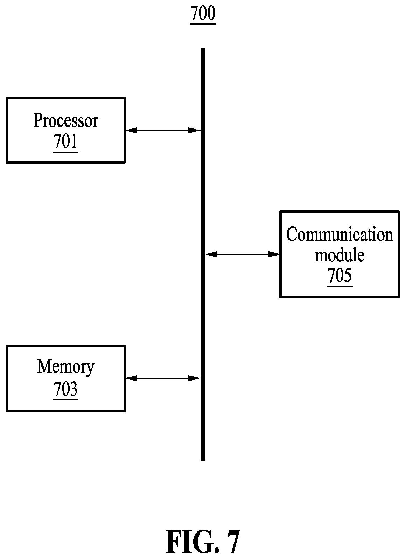

FIG. 7 illustrates an example configuration of an apparatus according to one or more embodiments.

Referring to FIG. 7, in a non-limiting example, an apparatus 700 may include a processor 701, a memory 703, and a communication module 705. The apparatus 700 may include an apparatus for performing the object detection method described above with reference to FIGS. 1 to 6.

The processor 701 may perform at least one operation of the object detection method described above with reference to FIGS. 1 to 6. The processor 701 may further perform at least one of extracting voxel features of a valid cell from voxel data corresponding to a point cloud obtained from a lidar, or obtaining object detection data from a transformer-based model for object detection based on the extracted voxel features. The processor 701 may further execute programs, and/or may control other operations or functions of systems 510 and 520 of FIGS. 5A and 5B and operations of the lidar 511, the voxel feature extraction module 512, cameras 521, image feature extraction module 522, multi-modal feature fusion module 523, and transformer-based model 524, and may include any one or a combination of two or more of, for example, a central processing unit (CPU), a graphic processing unit (GPU), a neural processing unit (NPU) and tensor processing units (TPUs), but is not limited to the above-described examples.

The memory 703 may include computer-readable instructions. The processor 701 may be configured to execute computer-readable instructions, such as those stored in the memory 703, and through execution of the computer-readable instructions, the processor 701 is configured to perform one or more, or any combination, of the operations and/or methods described herein. The memory 703 may be, for example, a volatile memory or a non-volatile memory. The memory 703 may store data for the object detection method described above with reference to FIGS. 1 to 6. In an example, the memory 703 may store data generated during the process of performing the object detection method or data necessary for performing the object detection method. In an example, the memory 703 may store a weight of a layer of a neural network included in the transformer-based model. In an example, the memory 703 may store data for the valid cell. In an example, the memory 703 may store a transformation matrix corresponding to the lidar and a camera.

In an example, the communication module 705 may provide a function for the apparatus 700 to communicate with another electronic device or another server through a network. In other words, the apparatus 700 may be connected to an external device (e.g., a terminal of a user, a server, or a network) through the communication module 705 and exchange data with the external device.

In an example where the apparatus 700 may not include the lidar and/or camera (i.e., employing an external lidar and/or camera), the apparatus 700 may exchange data with an external lidar and/or camera through the communication module 705. In an example, the apparatus 700 may receive point cloud data from the lidar through the communication module 705. In an example, the apparatus 700 may receive image data from one or more cameras through the communication module 705.

In an example, the apparatus 700 may include the lidar and/or camera (i.e., an internal lidar and/or camera). The apparatus 700 may extract voxel features from a point cloud obtained through an internal lidar. The apparatus 700 may extract image features from an image obtained through an internal camera.

In an example, the memory 703 may not be a component of the apparatus 700 and may be included in an external device accessible by the apparatus 700. In this case, the apparatus 700 may receive data stored in the memory 703 included in the external device and transmit data to be stored in the memory 703 through the communication module 705.

The apparatus 700 may further include other components not shown in the drawings. For example, the apparatus 700 may further include an input/output interface including an input device and an output device as means for interfacing with the communication module 705. In addition, for example, the apparatus 700 may further include other components such as a transceiver, various sensors, and a database.

The systems, apparatuses, devices, memory, processors, apparatus 700, processor 701, memory 703, communication module, lidar 511, the voxel feature extraction module 512, cameras 521, image feature extraction module 522, multi-modal feature fusion module 523, transformer-based models 320 and 524, system 510, and system 520 described herein and disclosed herein described with respect to FIGS. 1-7 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

## Claims

1. An object detection method, the method comprising:
extracting voxel features of valid cells from voxel data corresponding to a point cloud obtained using a depth sensor; and
generating object detection data using a transformer-based model for object detection based on the extracted voxel features,
wherein the valid cells comprise cells among a plurality of cells, included in the voxel data that comprises point data, and
wherein a cell among the plurality of cells that does not comprise corresponding point data is not a valid cell.

2. The object detection method of claim 1, wherein the voxel features are three-dimensional (3D) features, and
wherein the generating of the object detection data includes inputting tokens, which include the voxel features, to the transformer-based model.

3. The object detection method of claim 1 or 2, wherein
the transformer-based model comprises a transformer decoder and the extracted voxel features are applied to the transformer decoder, that is configured to perform cross attention; or
wherein the transformer-based model comprises a transformer encoder and a transformer decoder and wherein the extracted voxel features are applied to the transformer encoder, that is configured to perform cross attention.

4. The object detection method of any of claim 1-3, wherein the extracting of the voxel features comprises extracting a respective voxel feature of the valid cells, and
wherein the generating of the object detection data includes inputting a token corresponding to each of the respective voxel features to the transformer-based model.

5. The object detection method of any of claims 1-4, further comprising:
generating position embeddings of the valid cells by performing respective positional encodings of three-dimensional (3D) coordinates of a corresponding point in each of the valid cells, and
wherein the generating of the object detection data comprises:
generating the object detection data based on the position embeddings and the extracted voxel features; and preferably, wherein the corresponding point in each of the valid cells is a corresponding center point in each of the valid cells.

6. The object detection method of claim 5, wherein the generating of the position embeddings of the valid cells comprises performing the respective positional encodings of the 3D coordinates of the corresponding center points by applying, for each of the valid cells, a lowest weight to coordinate of a z-axis of the 3D coordinates of the corresponding center point, which includes coordinates at an x-axis, a y-axis, and the z-axis of the corresponding center point, and/or wherein the generating of the position embeddings of the valid cells comprises generating the position embeddings of the valid cells by performing the respective positional encodings of the 3D coordinates of the corresponding point in the valid cells based on a sign function.

7. The object detection method of any of claims 1-6, wherein the generating of the object detection data comprises:
extracting image features from an image obtained from an imaging device;
generating respective fusion features corresponding to the valid cells based on the voxel features of the valid cells and corresponding image features among the extracted image features; and
generating the object detection data from the transformer-based model based on the fusion features.

8. The object detection method of any of claims 1-7, wherein the generating of the object detection data further comprises:
identifying which image features correspond to which valid cells based on a transformation matrix corresponding to the depth sensor and the imaging device, preferably wherein the transformation matrix corresponding to the depth sensor and the imaging device is determined based on a relative position relationship between the depth sensor and the imaging device.

9. The object detection method of any of claims 1-8, wherein the voxel data comprises the plurality of cells obtained by dividing a space corresponding to the point cloud in a grid unit of a predetermined volume.

10. The object detection method of any of claim 1-9, wherein the depth sensor comprises a light detection and ranging, lidar.

11. An apparatus, comprising:
one or more processors configured to execute instructions; and
a memory storing the instructions, wherein execution of the instructions configures the one or more processors to:
extract voxel features of valid cells from voxel data corresponding to a point cloud obtained using a depth sensor; and
generate object detection data using a transformer-based model for object detection based on the extracted voxel features,
wherein the valid cells comprise cells among a plurality of cells, included in the voxel data that comprises point data, and
wherein a cell among the plurality of cells that does not comprise corresponding point data is not a valid cell.

12. The apparatus of claim 11, wherein
the transformer-based model comprises a transformer decoder and wherein the extracted voxel features are applied to the transformer decoder, that is configured to perform cross attention, or
the transformer-based model comprises a transformer encoder and a transformer decoder and the extracted voxel features are applied to the transformer encoder, that is configured to perform cross attention.

13. The apparatus of claim 11 or 12, wherein the one or more processors are further configured to:
generate position embedding of the valid cells by performing respective positional encodings of three-dimensional (3D) coordinates of a corresponding point in each of the valid cell, and
wherein the generating of the object detection data comprises:
obtaining the object detection data based on the position embeddings and the extracted voxel features.

14. The apparatus of any of claims 11-13, wherein the generating of the object detection data comprises:
extracting image features from an image obtained from an imaging device;
generating respective fusion features corresponding to the valid cells based on the voxel features of the valid cells and the corresponding image features among the extracted image features; and
generating the object detection data from the transformer-based model based on the fusion features.

15. An electronic device, comprising:
one or more processors configured to execute instructions; and
a memory storing the instructions, wherein execution of the instructions configures the one or more processors to:
generate object detection data using a transformer-based model, configured for object detection, through provision of tokens that include three-dimensional (3D) space voxel features extracted from 3D point cloud data generated using a depth sensor.
